# EUROPÄISCHE PATENTANMELDUNG

(11) **EP 0 972 785 A1**
(43) Veröffentlichungstag der Anmeldung: **19.01.2000**
(21) Anmeldenummer: 99113569.0
(22) Anmeldetag: 07.07.1999
(51) Int. Cl.: C08G 18/10, C09D 175/04

(54) **Polyurethanzubereitung zur Beschichtung von Substraten**

(30) Priorität: 17.07.1998 DE 19832173
(71) Anmelder: Bayer Aktiengesellschaft, 51368 Leverkusen (DE)
(72) Erfinder: Träubel, Harro, Dr., 51373 Leverkusen (DE); Pisaric, Karl, 50259 Pulheim (DE); Träubel, Michael, Dr., 50733 Köln (DE)

(57) **Zusammenfassung**

Es wurden wäßrige Polyurethanzubereitungen gefunden, enthaltend
a) wenigstens ein dispergiertes Polymer, das keine gegenüber NCO-Gruppen reaktive Aminogruppen trägt und
b) wenigstens ein NCO-Prepolymer auf Polyester- und/oder Polyetherpolyolbasis,
die sich insbesondere zur Herstellung von dicken Beschichtungen (größer 0,1 mm) auf Substraten wie beispielsweise Spaltleder oder Textilien eignen, wobei die so beschichteten Substrate besonders vorteilhafte anwendungstechnische Eigenschaften besitzen.

## Beschreibung

Die Erfindung betrifft Polyurethanzubereitungen, ein Verfahren zu ihrer Herstellung, damit beschichtete Substrate sowie ein entsprechendes Beschichtungsverfahren.

Mit dicken Polyurethanschichten versehene Substrate wie beispielsweise Leder, Textil usw. mit einer Beschichtungsdicke von größer als 0,1 mm finden beispielsweise für Schuhobermaterialien sowie für Artikel, wie sie beispielsweise im Autoinnenausbau eingesetzt werden, Verwendung. Auch substratbedingt können dickere Beschichtungen erforderlich sein. Setzt man beispielsweise Substrate mit unregelmäßiger Oberfläche wie z.B. Vliese oder Spaltleder ein, kann man mit dünnen Beschichtungen diese unregelmäßige Oberfläche nicht ausreichend abdecken, so daß es speziell beim Verdehnen unansehnlich wird (Orangenhaut).

Im allgemeinen können dicke Polyurethanbeschichtungen auf verschiedene Weise hergestellt werden. So können beispielsweise sogenannte High-Solid-Systeme - also festkörperreiche Mischungen - aus blockierten Isocyanatprepolymeren mit cycloaliphatischen Aminen zur Herstellung von dicken Beschichtungen verwendet werden (siehe DE-A-3 313 237).

Die beiden Komponenten werden dabei miteinander gemischt, wobei die entstandene Mischung über einen längeren Zeitraum stabil ist. Diese Mischung wird dann auf konventionellen Streichanlagen zum Beschichten von Substraten eingesetzt. Dabei streicht man die Mischung beispielsweise auf ein Trennpapier als einstweiligen Träger und erhitzt, wobei sich das Blockierungsmittel abspaltet und das Polyurethan gebildet wird. Nachteilig bei dieser Methode im Falle der Herstellung von dicken Beschichtungen ist der Umstand, daß das Blockierungsmittel nicht sofort vollständig aus der gebildeten Schicht entweicht und es sich somit auch noch nach längerer Gebrauchsdauer gaschromatografisch an der Oberfläche der Beschichtung nachweisen läßt.

Als weitere Möglichkeit zur Herstellung dickerer Polyurethanbeschichtungen sind die Schaumbeschichtungen, wie sie beispielsweise in US-A-3 713 868 beschrieben sind, zu nennen. Diese Treibmittel-enthaltenden wäßrigen Dispersionen können beispielsweise auf klassischen Textilbeschichtungsanlagen eingesetzt werden. Der Nachteil so hergestellter dicker Beschichtungen ist der, daß die physikalischen Eigenschaften der Beschichtung wie beispielsweise die Zugfestigkeit, die Weiterreißfestigkeit und die Flexibilität nicht den geforderten Ansprüchen genügen. Darüber hinaus benötigt man relativ aufwendige Trocknungsanlagen, um das Wasser, das sich durch die Schaumstruktur in einer Art Isolierschicht befindet, zu verdampfen.

Als weitere Möglichkeit dicke Polyurethanbeschichtungen herzustellen existiert die sogenannte Reaktivbeschichtung, bei der mit einer speziellen Apparatur gearbeitet wird, in der die hochreaktiven Reaktionspartner in genauen Mischungsverhältnissen gemischt werden und sofort auf einen einstweiligen Trennträger oder das Substrat selbst gespritzt werden. Nachteilig bei diesem Verfahren aber ist der hohe apparative Aufwand (H. Träubel et.al J. Coated Fabrics 1986, S. 250-262).

Aufgabe der vorliegenden Erfindung war es daher, eine Polyurethanzubereitung bereitzustellen, mit der es unter Vermeidung obengeschilderter Nachteile möglich ist, Substrate mit dicken Beschichtungen zu versehen.

Es wurden nun wäßrige Polyurethanzubereitungen gefunden, enthaltend
a) wenigstens ein dispergiertes Polymer, das keine gegenüber NCO-Gruppen reaktive Aminogruppen trägt und
b) wenigstens ein NCO-Prepolymer auf Polyester- und/oder Polyetherpolyolbasis.

Als gegenüber NCO-Gruppen reaktive Aminogruppen werden im Rahmen dieser Erfindung primäre sowie sekundäre aliphatische und aromatische Amine verstanden.

Unter NCO-Prepolymer wird im Rahmen dieser Erfindung ein NCO-gruppenhaltiges Polyurethan verstanden.

Auf Polyester- und/oder Polyetherpolyolbasis bedeutet, daß das NCO-Prepolymer der Komponente b) durch Umsetzung von Polyisocyanatverbindungen mit Polyester- und/oder Polyetherpolyolen hergestellt worden ist, wobei weitere gegenüber NCO-reaktive Verbindungen wie Monoalkohole sowie Mono- und Polyamine als zusätzliche Reaktanden nicht ausgeschlossen sind.

Unter dispergiertem Polymer werden im Rahmen dieser Anmeldung sowohl selbstdispergierende Polymere als auch mit Hilfe von Dispergiermitteln dispergierte Polymere verstanden.

Als mögliche Dispergiermittel sind beispielsweise kationische, anionische, amphotere wie auch nichtionische zu nennen. Bevorzugt ist das Polymer der Komponente a) jedoch selbstdispergierend.

Als Polymere kommen dabei beispielsweise in Frage: Polyacrylate sowie Polymethacrylate, Polybutadiene, Copolymere aus Styrol und Butadien (SBR), Polyvinylchlorid (PVC), Polyvinylacetat und Copolymere der genannten Polymere, Polyurethane sowie Mischungen davon.

Als selbstdispergierende Polymere der Komponente a) werden vorzugsweise solche eingesetzt, die ihre Dispergiereigenschaft aufgrund eingebauter, d.h. einpolymerisierter oder einpolyaddierter wasserlöslichmachender Gruppen, insbesondere Carboxylat-, Sulfonat- und/oder quartärneren Ammoniumgruppen besitzen.

Diese können beispielsweise durch Verwendung der entsprechenden Monomeren ins Polymer eingebaut werden.

Derartige Monomere sind beispielsweise für Polyurethane: Dimethylolpropionsäure, Addukt aus gegebenenfalls ethoxiliertem Butendiol und Natriumsulfit sowie C₁-C₄-Alkyl-C₁-C₄-dialkanolamin, wie beispielsweise Methyldiethanolamin.

Für einpolymerisierte wasserlösliche Gruppen kommen als Monomere insbesondere in Frage: gegebenenfalls substituierte Acrylsäuren wie beispielsweise Acrylsäure, Methacrylsäure, Itaconsäure.

Eine gute selbstdispergierende Fähigkeit besitzen Homopolymere mit wasserlöslichmachenden Gruppen oder Copolymere, die das Monomer mit wasserlöslichmachenden Gruppen in einer Menge von 1 bis 10 Gew.-%, bezogen auf das Copolymer enthalten.

Bei Polyurethanen ist es diese Menge an wasserlöslichmachenden Gruppen tragendem Polyol, Polyamin, Monoalkohol und/oder Monoamin, bezogen auf das Polyurethan.

Besonders bevorzugt sind selbstdispergierende Polymere wie Polyurethane, gegebenenfalls in Mischungen mit Polyacrylaten, Polymethacrylaten und/oder solche auf Basis von Polybutadienen.

Polyacrylate bzw. Polymethacrylate können aus den üblichen Monomeren aufgebaut sein wie beispielsweise Methyl(meth)-acrylat, Butyl-(meth)acrylat, Ethyl-(meth)acrylat und/oder (Meth)acrylsäure. Bei den bevorzugten Polyurethanen sind die besonders bevorzugt, deren Polyol- bzw. Polyaminkomponente ein hydrolysestabiles Polyurethan bzw. Polyharnstoff ergibt. Insbesondere sind dabei zu nennen Polycaprolacton, Polycarbonat sowie Polyether.

Als bevorzugte Isocyanatkomponente in Polyurethanpolymeren der Komponente a) sind aliphatische Isocyanate zu nennen, die vorzugsweise eine durchschnittliche NCO-Funktionalität von 1,8, oder größer, insbesondere 1,8 bis 4 besitzen.

Die bevorzugt eingesetzten Polymere der Komponente a), insbesondere die der selbstdispergierenden Polymere besitzen als Film eine Härte in Shore A von 30 bis 90, insbesondere 40 bis 80.

Besonders bevorzugte Polymere sind solche mit einem mittleren Molekulargewicht von 500 bis 5 000, insbesondere von 1 000 bis 3 000, besonders bevorzugt von 1 000 bis 2 000 g/mol.

Die Polyether- bzw. Polyester-NCO-Prepolymere der Komponente b) werden durch Umsetzung von isocyanathaltigen Verbindungen mit entsprechenden Polyetherpolyolen und/oder Polyesterpolyolen erhalten.

Als Isocyanatprepolymere der Komponente b) der erfindungsgemäßen Polyurethanzubereitung werden vorzugsweise solche mit einem mittleren Molekulargewicht von größer als 500 g/mol, insbesondere von mehr als 1000 und besonders bevorzugt von größer als 1500 g/mol eingesetzt. Bevorzugt ist es ebenfalls, solche mit einem Molgewicht von kleiner als 10 000 g/mol einzusetzen. Zwar kann das Molgewicht auch größer sein, doch ist eine damit einhergehende Viskositätszunahme mit einem Lösungsmittelzusatz in der Regel zu kompensieren.

Der Begriff 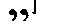 mittleres Molekulargewicht" im Sinne der Erfindung bedeutet als Zahlenmittel bestimmtes Molekulargewicht.

Der NCO-Gehalt des eingesetzten NCO-Prepolymeren der Komponente b) beträgt vorzugsweise 1 bis 20, insbesondere 2 bis 8 und besonders bevorzugt 2,5 bis 5 Gew.-%, bezogen aufdas NCO-Prepolymere.

Für den Aufbau der einzusetzenden NCO-Prepolymere der Komponente b) kommen als NCO-gruppenhaltige Verbindungen vorzugsweise Polyisocyanate in Frage, die eine durchschnittliche NCO-Funktionalität von 1,8 oder größer haben. Es sind dies beispielsweise aliphatische, aromatische und heterocyclische Polyisocyanate, beispielsweise Ethylendiisocyanat, 1,4-Tetramethylendiisocyanat, 1,6-L-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat, Polyphenylpolymethylenpolyisocyanate, wie sie durch Anilin-Formaldehyd-Kondensation und anschließende Phosgenierung erhalten werden, m- und p-Isocyanatophenylsulfonylisocyanate, perchlorierte Arylpolyisocyanate, Carbodiimidgruppen aufweisende Polyisocyanate, Diisocyanate, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, durch Telomerisationsreaktionen hergestellte Polyisocyanate, Estergruppen aufweisende Polyisocyanate, Umsetzungsprodukte der obengenannten Isocyanate mit Acetalen und polymere Fettsäurereste enthaltende Polyisocyanate.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden 1-Isocyanato-3,5,5-trimethyl-5-isocyanatomethylcyclohexan, Perhydro-4,4'-diphenylmethandiisocyanat, die isomeren Toluylendiisocyanate, 4,4'-Diphenylmethandiisocyanat, 1,6-Hexamethylendiisocyanat, trimeres Toluylendiisocyanat, das Umsetzungsprodukt aus 1 Mol Trimethylolpropan und 3 Mol Toluylendiisocyanat sowie das Mischtrimerisat aus 3 Mol Toluylendiisocyanat und 2 Mol Hexamethylendiisocyanat.

Für die Herstellung der Isocyanatprepolymere der Komponente b) können demnach alle üblichen Isocyanate eingesetzt werden. Bevorzugte, dem NCO-Prepolymer als Komponente b) zugrundeliegende Isocyanat-Verbindungen sind: 4,4'-Diisocyanatdiphenylmethan (MDI), Toluylendiisocyanate (TDI), Hexamethylendiisocyanat (HDI) sowie Isophorondiisocyanat (IPDI).

Perhydrierte Isocyanate wie Dicyclohexylmethan-4,4'-diisocyanat (H12MDI) oder perhydriertes TDI etc. sind ebenfalls einsetzbar.

Vorzugsweise werden diese Produkte aber in Mischungen mit anderen Isocyanaten verwendet.

Als Reaktionspartner für die genannten Polyisocyanate zur Herstellung der NCO-Prepolymeren kommen als Polyole Polyester- und/oder Polyetherpolyole, wie sie für die Herstellung von homogenen und von zellförmigen Polyurethanen an sich bekannt sind, in Frage.

Besonders bevorzugt werden NCO-Prepolymere auf Basis von Polyether- und Polyesterpolyolen, wobei das Verhältnis des Polyetherpolyols zu Polyesterpolyol vorzugsweise 30:70 bis 70:30 beträgt. In einer besonders bevorzugten Ausführungsform ist der Anteil des Polyetherpolyols größer als der des Polyesterpolyols.

Als bevorzugte Polyether sind zu nennen: Homo- oder blockpolymere Alkylenglykolether, insbesondere Polyethylenglykolether, Polypropylenglykolether, Polyethylenpolypropylenglykol-Mischether oder Mischungen davon.

Bevorzugt ist als Polyether Polypropylenglykolether der anteilig (d.h. in polyaddierter oder zugemischter Form) bis zu 80 Gew.-%, vorzugsweise bis 40 Gew.-% Ethylenoxid oder Polytetramethylenglykolether enthält.

Als Polyesterpolyole sind beispielsweise zu nennen:

Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen z.B. Ethylenglykol, Propandiol-(1,2) und -(1,3), Butandiol-(1,4) und -(2,3), Hexandiol-(1,6), Octandiol-(1,8), Neopentylglykol, Cyelohexandimethanol (1,4-Bis-hydroxymethyl-cyclohexan), 2-Methyl-1,3-propandiol, Glycerin, Trimethylpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Dipropylenglykol, Dibutylenglykol und Polybutylenglykole in Frage.

Vorzugsweise werden Mischester der Adipinsäure und Hexandiol und Neopentylglykol eingesetzt, wobei das molare Verhältnis der Polyole von 2:8 bis 8:2 variieren kann. Polycarbonate des Hexandiols (vorzugsweise in Mischung mit kristallisationsverhindernden Glykolen) und des Di- bis Tetra-ethylenglykols können ebenfalls zur Herstellung des NCO-Prepolymeren eingesetzt werden. Sowohl Polyester als auch Polyether können beispielsweise durch einkondensierte tri- oder höherfunktionelle Verbindungen wie Trimethylolpropan, Pentaerythrit eine OH-Funktionalität erhöhen; insbesondere auf ≥2, vorzugsweise auf ≥2 bis 4.

Das Verhältnis von NCO-Prepolymeren zu den dispergierten Polymeren in der erfindungsgemäßen Polyurethanzubereitung beträgt vorzugsweise 1:10 bis 10:1, insbesondere 0,5:1 bis 3:1. Die erfindungsgemäßen wässrigen Polyurethanzubereitungen enthalten vorzugsweise von 20 bis 90, insbesondere 40 bis 60 Gew.-% dispergiertes Polymer der Komponente a) und 10 bis 80, insbesondere 20 bis 60 Gew.-% des NCO-Prepolymeren der Komponente b), jeweils bezogen auf die Zubereitung. Die erfindungsgemäße Polyurethanzubereitung kann darüber hinaus weitere Zusätze enthalten. Beispielsweise Katalysatoren, die die Isocyanat-Wasser-Reaktion beschleunigen, wobei diese vorzugsweise in einer Menge von 1 bis 5 Gew.-%, bezogen auf die Polyurethanzubereitung, eingesetzt werden können. Als geeignete Katalysatoren sind zu nennen: tertiäre Amine, wie Dimethyl-benzylamin, Diazabicyclooctan, Zinnverbindungen, wie Zinn-di-octoat, Dibutylzinndilaurat, Kobaltnaphthenat sowie die üblichen für die Urethanisierung eingesetzten Katalysatoren. Bevorzugt ist es, keinen Katalysator einzusetzen. Für NCO-Prepolymeren auf Basis von Polyesterpolyolen sind insbesondere schwermetallfreie Katalysatoren bevorzugt. Weiterhin können Farbmittel, insbesondere Pigmente und/oder Farbstoffe, vorzugsweise 0 bis 20 Gew.-%, bezogen auf die Polyurethanzubereitung eingesetzt werden. Desweiteren können sonstige Pigmente, Füllstoffe, Licht- und Hydrolysestabilisatoren, Anti-oxidantien, Flammschutzmittel, Antistatika, Verlaufhilfsmittel, Entschäumer, fungizide und bakterizide Mittel, Griffmittel und ähnliche an sich bekannte Additive zugesetzt werden. Die Verlaufsmittel werden vorzugsweise bis zu 5 % eingesetzt.

Als solche eignen sich beispielsweise organische Silikonverbindungen. Die erfindungsgemäßen Polyurethanzubereitungen zeichnen sich dadurch aus, daß sie für die Herstellung der Beschichtung keine aufwendigen Apparate erfordern.

Die Erfindung betrifft weiterhin ein Verfahren zur Herstellung der erfindungsgemäßen Polyurethanzubereitung, dadurch gekennzeichnet, daß man in eine wäßrige Polymerdispersion eines Polymers, das keine gegenüber NCO-Gruppen reaktive Aminogruppen trägt, wenigstens ein NCO-Prepolymer auf Polyester- und/oder Polyetherpolyolbasis sowie gegebenenfalls weitere Zusätze einträgt.

Die Herstellung der erfindungsgemäßen Polyurethanpräparation erfolgt durch Mischen des dispergierten Polymers der Komponente a), NCO-Prepolymeren der Komponente b), Wassser sowie gegebenenfalls weiteren Zusätzen. Bevorzugt erfolgt die Mischung unter Einsatz von Rührern, insbesondere Schnellrührern, in kontinuierlichen Mischaggregaten oder mittels einfacher Rührer wie sie beispielsweise im Malerhandwerk üblich sind.

In einer bevorzugten Ausführungsform wird das in Wasser dispergierte Polymer der Komponente a) vorgelegt und das Prepolymer und gegebenenfalls weitere Zusätze unter Rühren zugemischt.

Die erfindungsgemäße Herstellung erfolgt vorzugsweise bei einer Temperatur von 15 bis 30°C, vorzugsweise bei Raumtemperatur.

Die Erfindung betrifft weiterhin beschichtete Substrate, aufgebaut aus:
a) Substrat,
b) Haftschicht H, die an das Substrat angrenzt,
c) gegebenenfalls eine Deckschicht D, die
d) gegebenenfalls durch eine oder mehrere Zwischenschichten getrennt an die Haftschicht angrenzt,
dadurch gekennzeichnet, daß die Haftschicht H durch Aushärten der erfindungsgemäßen Polyurethanzubereitung entstanden ist.

Als Substrate kommen vor allem flächige Substrate in Frage, vorzugsweise Leder, insbesondere Spaltleder sowie Materialien aus natürlichen und/oder synthetischen Fasern wie Vliese, Gewebe, Gewirke und Papier. Insbesondere bevorzugt ist Leder, vorzugsweise Spaltleder.

Die Beschichtungsdicke von Haft-, gegebenenfalls Deck- und Zwischenschichten beträgt zusammen vorzugsweise mehr als 0,05 mm, insbesondere 0,1 bis 3 mm. Besonders bevorzugt beträgt die Dicke der Haftschicht H mehr als 0,1 mm.

Als mögliche Deckschicht c) sowie Zwischenschichten d) kommen vorzugsweise Polyurethanschichten in Frage, die eine Härte in Shore A von größer 60 besitzen. Diese Polyurethane werden in üblicher Weise verwendet.

Auch andere Polymermaterialien, beispielsweise Acrylate, Nitrocellulose, Polyamidsäure, Acetobutyrat, können für die Deckschicht verwendet werden, wobei auch die aus diesen Materialien gebildete Schicht vorzugsweise eine Härte in Shore A von ≥60 besitzt.

Die erfindungsgemäßen, beschichteten Substrate besitzen vorzugsweise eine gute Kälteflexibilität, Abrieb- und Zugfestigkeit. Außerdem emittieren sie keine Blockierungsmittel.

Die Erfindung betrifft weiterhin ein Verfahren zur Herstellung der erfindungsgemäßen beschichteten Substrate durch
i) Auftragung und Aushärtung einer Polyurethanzubereitung auf das Substrat oder durch
ii) Auftragung einer Polyurethanzubereitung auf ein gegebenenfalls mit einer Deckschicht D und gegebenenfalls einer oder mehreren Zwischenschichten versehenen einstweiligen Träger, Einlegen des zu beschichtenden Substrates in die von der Polyurethanzubereitung gebildete Schicht und anschließender Aushärtung,
dadurch gekennzeichnet, daß als Polyurethanzubereitung die erfindungsgemäße Polyurethanzubereitung eingesetzt wird.

Das erfindungsgemäße Beschichtungsverfahren kann also als Direktbeschichtung i) oder als Umkehrbeschichtung ii) vorgenommen werden. Bei der Umkehrbeschichtung trägt man vorzugsweise auf einen Träger, z.B. auf einem Trennpapier, zunächst die Deckschicht auf, trocknet diese und trägt gegebenenfalls weitere Deckschichten (Zwischenschichten) auf, wobei die härteste Deckschicht zuerst und jede weitere in Abstufung ihrer Härte danach aufgetragen werden und trägt dann vorzugsweise auf die getrocknete Deckschicht(en) die erfindungsgemäße Polyurethanzubereitung für die Haftschicht H auf. In diese gebildete vorzugsweise noch feuchte Schicht wird dann das zu beschichtende Substrat eingelegt. Nach der Härtung der Haftschicht wird der einstweilige Träger vorzugsweise von der Deckschicht abgezogen, so daß also die erste auf den Träger aufgebrachte Schicht zur äußeren Schicht des zu beschichtenden Substrates wird. Da Leder ein besonders unegales Material ist, war es besonders überraschend. daß diese Arbeitsweise auch bei Leder zur wertvollen Beschichtung führt. In einer bevorzugten Ausführungsform des erfindungsgemäßen Beschichtungsverfahrens werden die Ausgangsprodukte für die jeweiligen Schichten vorzugsweise so gewählt, daß die Haftschicht H weicher als die Deckschicht D ist. Vorzugsweise hat die Haftschicht H eine Härte von 25 bis 75 Shore A und die Deckschicht D eine Härte von 50 bis 100 Shore A, wobei die Härtedifferenz zwischen den beiden Schichten insbesondere mehr als 10 Shore A beträgt.

Ebenfalls bevorzugt ist eine Verfahrensvariante, bei der neben der Deckschicht D eine oder mehrere Zwischenschichten mit aufgetragen werden, wobei bis zu 4 Zwischenschichten sinnvoll sein können. Dabei weisen die einzelnen Zwischenschichten ebenfalls eine Härte von vorzugsweise 50 bis 100 Shore A auf. Vorzugsweise beträgt der Härteunterschied der an die Haftschicht H angrenzenden weicheren Zwischenschicht zur jeweils benachbarten, weiter von der Haftschicht entfernten Zwischenschicht wenigstens 10 Shore. Auch der Unterschied von gegebenenfalls weiteren benachbarten Zwischen- bzw. Deckschichten beträgt vorzugsweise 10 Shore A, wobei die jeweils weichere Deckschicht bzw. Zwischenschicht näher der Haftschicht ist als die härtere.

Besonders bevorzugt wird das erfindungsgemäße Verfahren als Umkehrbeschichtung ii) verwendet, bei dem die einstweiligen Träger Verwendung finden.

Als einstweilige Träger sind beispielsweise Silikonmatrizen oder andere trennfähige Materialien geeignet. Das erfindungsgemäße Verfahren läßt sich aber besonders vorteilhaft auf Textilbeschichtungsmaschinen mit Trennpapier ausführen. Die Aushärtung der Haftschicht erfolgt vorzugsweise bei einer Temperatur von 50 bis 80°C. Die so erhaltenen Beschichtungen weisen insbesondere bei Schichtdicken von größer 0,1 mm die folgenden vorteilhaften Eigenschaften auf:

### Beispiele

Die in den folgenden Beispielen verwendeten Einsatzstoffe werden nachfolgend beschrieben:

### Polyurethandispersionen

### Dispersion 1

50 %ige aliphatische, anionische PUR-Dispersion mit folgenden Kenndaten: Härte Shore A = 62; 100 %-Modul = 2 MPa, Zugfestigkeit = 20 MPa; Bruchdehnung = 700 % (DIN 53 504)

### Dispersion 2

40 %ige anionische, aliphatische PUR-Dispersion mit folgenden Kenndaten: Härte Shore A = 95; 100 %-Modul = 20 MPa, Zugfestigkeit = 40 MPa; Bruchdehnung = 300 %

### Dispersion 3

40 %ige aliphatische, anionische PUR-Dispersion mit folgenden Kenndaten: Härte Shore A = 60; 100 %-Modul = 6 MPa, Zugfestigkeit = 34 MPa; Bruchdehnung = 500%

### Dispersion 4

40 %ige anionische, aliphatische PUR-Dispersion mit folgenden Kenndaten: Härte Shore A = 65; 100 %-Modul = 2,5 MPa, Zugfestigkeit = 20 MPa; Bruchdehnung = 500 %

### Dispersion 5

40 %ige anionische, aliphatische PUR-Dispersion mit folgenden Kenndaten: Härte Shore A = 93; 100 %-Modul = 5 MPa, Zugfestigkeit = 35 MPa; Bruchdehnung = 600 %

### Dispersion 6

30 %ige anionische, aliphatische PUR-Dispersion mit folgenden Kenndaten: Härte Shore A = 70; 100 %-Modul = 4,2 MPa, Zugfestigkeit = 42 MPa; Bruchdehnung = 560%

### Prepolymere

### NCO-Prepolymer 1

80 %ige Lösung in Ethylacetat eines aus einem trifunktionellen Polyether (MG Mₙ = 4800) und 4,4'-Methylendi(phenylisocyanat) (MDI)-Isomerengemisch hergestellten NCO-Prepolymers mit einem NCO-Gehalt von 3,7 %.

### NCO-Prepolymer 2

80 %ige Lösung in Ethylacetat eines wie unter NCO-Prepolymer 1 beschriebenen Prepolymeren, jedoch unter Mitverwendung von 20 % (bezogen auf den Polyether) eines difunktionellen Polyadipats mit Mₙ = 1700 hergestellten Prepolymers mit einem NCO-Gehalt von 3,7 %.

### NCO-Prepolymer 3

80 %ige Lösung in Toluol eines aus einem Hexandiol/Neopentylglykol-Polyadipat (Mₙ = 1700) und Toluylendiisocyanat (TDI)-Isomerengemisch hergestellten NCO-Prepolymers mit einem NCO-Gehalt von 3,6 %.

### Hilfs- und Zusatzstoffe:

H1) Buchenholzmehl, mittlere Korngröße 10 Mikrometer.
H2) Bindemittelarme, caseinfreie wässrige Pigmentpräparationen.
H3) Polyethermodifiziertes und damit wasserdispergierbares Hexamethylendiisocyanat (HDI)-Trimerisat, 80 %ig in Propylenglykol-Diacetat mit einem NCO-Gehalt von 12,6 %.
H4) Bindemittelarme, in Binderansätze einarbeitbare Silikatformulierung; Trockengehalt 23 %.
H5) Wasserdispergierbare/lösliche Silikonformulierungen.
H6) Wasserdispergierbare Formulierung eines assoziativen PUR-Verdickers, Wirkstoffgehalt 8 %.
H7) Di-aza-bicyclooctan[2,2,2] (DABCO).

### Beispiel 1

Es wurde eine wäßrige Paste hergestellt aus 160 g Dispersion 1, 12 g H1 und 10 g der schwarzen Pigmentpräparation H2. In diese Paste wurden unter Rühren bei ca. 800 U/min 70 g des NCO-Prepolymeren 3 eingetragen. Die entstandene Dispersion besitzt zum Zeitpunkt des Zusammenrührens eine Viskosität von 1 000 mPas. Nach 1 Stunde bei Raumtemperatur stieg sie auf 1 800, nach 3 Stunden auf 2 000 und nach 5,5 Stunden auf 2 500 mPas.
a) Diese Paste wurde mittels einer Spritzpistole auf ein mit einem Vorfinish (15 g/m² fest) aus 70 g der Dispersion 2, 30 g der Dispersion 3 und 1,5 g H5 versehenes Trennpapiermaß in einer Menge von 250 g/m² (naß) aufgetragen, ein Spaltleder eingelegt und 4 Minuten bei 70°C getrocknet. Nach dem Abkühlen auf Raumtemperatur wurde vom Trennpapier abgezogen. Die Oberfläche war noch leicht klebrig, was nach 14 h Hängen an der Luft völlig verschwand. Der gleiche Ansatz wurde auch nach dreistündigem Lagern bei Raumtemperatur erneut verarbeitet und wie oben zum Beschichten verwendet. Es ergaben sich keine Unterschiede. Die Schichtdicke in Beispiel 1a) beträgt mehr als 0,15 mm.
b) Ein weiterer Teil dieser Paste wurde mit ca. 150 g/m² (naß) auf ein wie oben vorbereitetes Trennpapier aufgestrichen und ein Baumwollgewebe eingelegt. Nach Passieren eines Trockentunnels bei einer Temperatur von 80 bis 125°C und schließlich bei 135°C wurde das beschichtete Gewebe vom Trennpapier abgezogen. Die Schichtdicke in Beispiel 1b) beträgt 0,19 mm.

### Beispiele 2 bis 6

Analog zu Beispiel 1 wurde in Beispielen 2, 4a, 5 und 6 Spaltleder, in Beispiel 3 Mikrofaservlies und in Beispiel 4b Baumwollgewebe beschichtet. Dabei kam ein Deckstrich, gegebenenfalls Zwischenstrich und ein Haftstrich folgender Zusammensetzung zum Einsatz:

**Tabelle**

| | | | | | |
|---|---|---|---|---|---|
| (Angaben in g) | | | | | |

| **Deckstrich** | **Bsp. 2** | **Bsp. 3** | **Bsp. 4a/b** | **Bsp. 5** | **Bsp. 6** |
|---|---|---|---|---|---|
| Dispersion 2 | 600 | 800 | 500 | 500 | 1000 |
| Dispersion 4 | 400 | 200 | - | - | - |
| Dispersion 6 | - | - | 500 | 500 | - |
| H2 (schwarz) | 80 | 80 | - | 150 | 200 |
| H2 (rot) | - | - | - | - | - |
| H4 | 50 | 50 | - | - | - |
| H5 | - | - | 10 | 10 | - |
| H6 | 40 | 50 | 80 | 80 | 100 |
| Rakelspalt (mm) | 0,04 | 0,04 | Luftrakel | | |
| Feststoff-Auflage/(g/m²) | 15 | 15 | 8 | 15 | 15 |
| Schichtdicke (mm) | 0,015 | 0,015 | 0,008 | 0,015 | 0,015 |
| Trockungstemperatur (°C) | 80-120 | 80-120 | 80-150 | | |

| **Zwischenstrich** | | | | | |
|---|---|---|---|---|---|
| Dispersion 4 | 1000 | - | - | 1000 | 1000 |
| H2 (schwarz) | 80 | - | - | - | - |
| H2 (rot) | - | - | - | 200 | 200 |
| H3 | 30 | - | - | 30 | 25 |
| H4 | - | - | - | 50 | 50 |
| H6 | 35 | - | - | 40 | 40 |
| Rakelspalt (mm) | 0,20 | - | - | 0,08 | 0,08 |
| Feststoff-Auflage (g/m²) | 50 | - | - | 30 | 30 |
| Schichtdicke (mm) | 0,05 | - | - | 0,03 | 0,03 |
| Trocknungstemperatur (°C) | 80-95 | - | - | 80-150 | 80-150 |

| **Haftstrich** | | | | | |
|---|---|---|---|---|---|
| Dispersion 1 | 160 | 160 | 160 | 160 | 160 |
| Dispersion 5 | 20 | 20 | 20 | 20 | 20 |
| Prepolymer 1 | - | 70 | 70 | - | - |
| Prepolymer 2 | 70 | - | - | - | - |
| Prepolymer 3 | - | - | - | 50 | 40 |
| H1 | 12 | 12 | 12 | 12 | 12 |
| H2 (schwarz) | 10 | 10 | 10 | 10 | 10 |
| H7 | - | - | 0,01 | 0,01 | - |
| Rakelspalt (mm) | 0,13 | 0,13 | 0,19 | 0,19 | 0,19 |
| Feststoff-Auflage (g/m²) | 130 | 130 | 150 | 150 | 150 |
| Schichtdicke (mm) | 0,13 | 0,13 | 0,15 | 0,15 | 0,15 |
| Trockentemperatur (°C) | 90-95 | 90-95 | 85-95 | 85-95 | 85-95 |
| Gesamtschichtdicke(mm) | 0,195 | 0,145 | 0,158 | 0,195 | 0,195 |

Die physikalischen Eigenschaften aus den Beispielen 2 und 3 als Film - mit nachfolgender Schichtdicke - geprüft; betragen:

| | **Bsp.2** | **Bsp.3** |
|---|---|---|
| Schichtdicke (mm) | 0,14 | 0,13 |
| Zugfestigkeit nach DIN 53504 (Mpa) | 2 | 1,9 |
| Bruchdehnung (%) | 110 | 112 |
| Weiterreißfestigkeit nach DIN 53356 (dN/cm) | 1,0 | 0,6 |

Physikalische Eigenschaften der beschichteten Artikel:

| **Eigenschaften** | **Bsp. 1a)** | **Bsp.1 b)** | **Bsp. 2** | **Bsp.3** | **Bsp. 6** |
|---|---|---|---|---|---|
| Knickfestigkeit nach DIN 53351 | | | | | |
| -trocken | 100.000 | 100.000 | 100.000 | 100.000 | 100.000 |
| -naß | >20.000 | 20.000 | >50.000 | >50.000 | |
| -kalt (-30°C) | | | 10.000 | 10.000 | |

## Patentansprüche

1. Wäßrige Polyurethanzubereitungen, enthaltend
a) wenigstens ein dispergiertes Polymer, das keine gegenüber NCO-Gruppen reaktive Aminogruppen trägt und
b) wenigstens ein NCO-Prepolymer auf Polyester- und/oder Polyetherpolyolbasis.

2. Polyurethanzubereitung gemäß Anspruch 1, dadurch gekennzeichnet, daß als polymere Polyacrylate, Polymethacrylate, Polybutadiene, Copolymere aus Styrol und Butadien (SBR), Polyvinylchlorid (PVC), Polyurethane sowie Mischungen davon eingesetzt werden.

3. Polyurethanzubereitung gemäß Anspruch 1, dadurch gekennzeichnet, daß das NCO-Prepolymer der Komponente b) ein mittleres als Zahlenmittel bestimmtes Molekulargewicht von größer als 500 g/mol besitzt.

4. Verfahren zur Herstellung einer Polyurethanzubereitung gemäß Anspruch 1, dadurch gekennzeichnet, daß man in eine wäßrige Polymerdispersion eines Polymeren das keine gegenüber NCO-Gruppen reaktiven Aminogruppen trägt, ein NCO-Prepolymeres auf Polyether- und/oder Polyesterpolyolbasis sowie gegebenenfalls weitere Zusätze einträgt.

5. Beschichtete Substrate, aufgebaut aus:
a) Substrat,
b) Haftschicht H, die an das Substrat angrenzt,
c) gegebenenfalls eine Deckschicht D, die
d) gegebenenfalls durch eine oder mehrere Zwischenschichten getrennt an die Haftschicht angrenzt,
dadurch gekennzeichnet, daß die Haftschicht H durch Aushärten der wäßrigen Polyurethanzubereitung gemäß Anspruch 1 entstanden ist.

6. Beschichtete Substrate gemäß Anspruch 5, dadurch gekennzeichnet, daß als Substrate Leder, insbesondere Spaltleder sowie Materialien aus natürlichen und/oder synthetischen Fasern, insbesondere Vliese, Gewebe, Gewirke, sowie Papier eingesetzt werden.

7. Beschichtete Substrate gemäß Anspruch 5, dadurch gekennzeichnet, daß die Beschichtungsdicke von Haft-, gegebenenfalls Deck- und Zwischenschichten insgesamt größer 0,1 mm, insbesondere 0,1 bis 3 mm beträgt.

8. Verfahren zur Herstellung beschichteter Substrate gemäß Anspruch 5, durch
i) Auftragung und Aushärtung einer Polyurethanzubereitung auf das Substrat oder durch
ii) Auftragung einer Polyurethanzubereitung auf ein gegebenenfalls mit einer Deckschicht D und gegebenenfalls einer oder mehreren Zwischenschichten versehenen einstweiligen Träger, Einlegen des zu beschichtenden Substrates in die von der Polyurethanzubereitung gebildete Schicht und anschließender Aushärtung,
dadurch gekennzeichnet, daß als Polyurethanzubereitung die des Anspruchs 1 eingesetzt wird.
